# EUROPÄISCHE PATENTSCHRIFT

(11) **EP 0 610 593 B1**
(45) Veröffentlichungstag und Bekanntmachung des Hinweises auf die Patenterteilung: **06.05.1998**
(21) Anmeldenummer: 93120773.2
(22) Anmeldetag: 23.12.1993
(51) Int. Cl.: B23D 59/00, B23Q 11/00

(54) **Elektrohandsäge, insbesondere Schwertsäge**
Portable electric hand saw, in particular sabre saw
Scie portable éléctrique, en particulier scie en forme de sabre

(30) Priorität: 30.01.1993 DE 4302674
(43) Veröffentlichungstag der Anmeldung: 17.08.1994
(73) Patentinhaber: ROBERT BOSCH GMBH, 70442 Stuttgart (DE)
(72) Erfinder: Neubert, Werner, Dipl.-Ing. (FH), D-70619 Stuttgart (DE); Schadow, Joachim, Dipl.-Ing., D-70565 Stuttgart (DE); Mueller, Joachim, D-70597 Stuttgart (DE); Staebler, Manfred-Otto, D-71111 Waldenbuch (DE); Dohr, Manfred, D-73734 Esslingen (DE); Faerber, Herbert, Dipl.-Kaufmann, D-70329 Stuttgart (DE); Warkentin, Heinz, D-71573 Allmersbach im Tal (DE)

(56) Entgegenhaltungen:
- EP-A- 0 347 631
- DE-A- 2 404 872
- DE-A- 3 336 814
- DE-A- 3 638 376
- FR-A- 2 327 845
- US-A- 2 631 619

## Beschreibung

### Stand der Technik

Die Erfindung geht aus von einer handgeführten elektrisch angetriebenen Schwertsäge nach dem Oberbegriff des Patentanspruchs 1.

Bei Sägearbeiten mit derartigen Handwerkzeugen ist es bekannt, daß je nach dem zu sägenden Material Sägespäne oder Sägemehl und Staub durch das Sägeblatt aus dem Sägeschlitz zur Maschine hin transportiert wird, was sowohl für die mit dem Werkzeug arbeitende Person als auch für die Umwelt belastend ist.

### Vorteile der Erfindung

Die erfindungsgemäße Befestigung eines Absaugkanals am Werkzeug mit den kennzeichnenden Merkmalen des Patentanspruchs 1 hat den Vorteil, daß nunmehr bei Betrieb der Säge im Bereich der Maschinenvorderseite anfallender Staub sowie Sägemehl durch ein am Absaugstutzen des Absaugkanals anzuschließenden Schlauch eines Absaugaggregates abtransportiert werden kann. Als weiterer Vorteil ist anzusehen, daß das von dem Sägeblatt vom in das Maschinengehäuse transportierte Sägegut durch die entsprechend angeordnete Einsaugöffnung des Absaugkanals abgesaugt wird und somit nicht ins Getriebe der Maschine gelangen kann.

Durch die in den Unteransprüchen aufgeführten Maßnahmen ergeben sich vorteilhafte Weiterbildungen und Verbesserungen der im Patentanspruch 1 angegebenen Merkmale.

### Zeichnung

Ein Ausführungsbeispiel der Erfindung ist in der Zeichnung dargestellt und in der nachfolgenden Beschreibung näher erläutert. Es zeigen Figur 1 eine Schwertsäge mit abgenommenem erfindungsgemäßen Absaugkanal in raumbildlicher Darstellung, Figur 2 zeigt den unteren Teil des Maschinenhandgriffs mit der eingehängten Zunge an der Rückseite des Absaugkanals im Querschnitt und Figur 3 zeigt den vorderen Bereich des Maschinengehäuses mit einer beidseitigen Verrastung des Absaugkanals im Querschnitt.

### Beschreibung des Ausführungsbeispieles

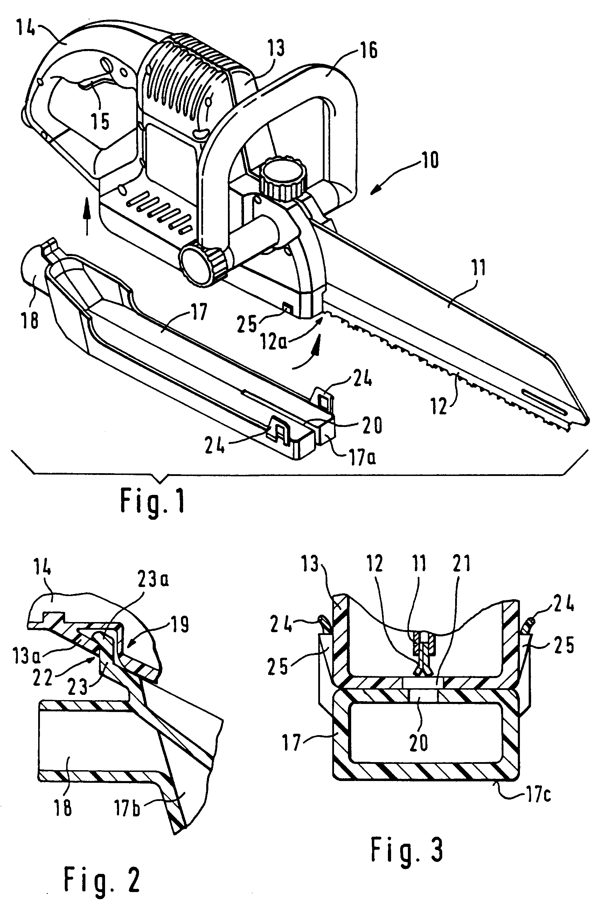

In Figur 1 ist eine handgeführte elektrisch angetriebene Schwertsäge dargestellt und mit 10 bezeichnet, deren an der Unterseite eines feststehenden Schwertes 11 aufgenommenen nebeneinanderliegenden zwei Sägeblätter 12 gegenläufig vom elektrischen Antrieb der Schwertsäge hin- und herbewegt werden. Der hintere Endabschnitt 12a der Sägeblätter 12 ist innerhalb eines ein Getriebe und einen Elektromotor umfassenden mehrteiligen Maschinengehäuse 13 am nicht dargestellten Getriebeausgang aufgenommen. Am hinteren Teil der Schwertsäge 10 ist das Gehäuse 13 als Handgriff 14 mit einem Schaltelement 15 zum ein- und ausschalten der Maschine ausgebildet und im vorderen Bereich ist auf einem quer zum Schwert 11 im Gehäuse 13 aufgenommenen Rohrabschnitt ein Zusatzhandgriff 16 in Form eines Griffbügels befestigt.

An der Unterseite des Maschinengehäuses 13 ist ein Absaugkanal 17 zu befestigen, der in Figur 1 als separates abgenommenes Teil dargestellt und von unten in Richtung der Pfeile 17 bündig auf die Unterseite der Schwertsäge 10 und den Handgriff 14 befestigt wird. An seiner Rückseite ist der Absaugkanal 17 mit einem Absaugstutzen 18 versehen, der parallel zur gedachten Werkzeuglängsachse verläuft. Dabei ist zum Anbringen des Absaugkanals 17 am Maschinengehäuse 13 zunächst eine im Bereich des Absaugstutzens 18 angeordnete Einhängvorrichtung 19 scharnierartig schwenkbar an der Rückseite des Handgriffs - wie in Figur 2 im Querschnitt dargestellt - eingehängt und im vorderen Bereich wird der Absaugkanal 17 mit Rastmitteln am Maschinengehäuse 13 - wie in Figur 3 im Querschnitt dargestellt - aufgeklipst. Eine Einsaugöffnung 20 am Absaugkanal 17 reicht dabei von der vorderen Stirnseite 17a des Absaugkanals 17 bis unter einen Längsschlitz 21 im Maschinengehäuse 13, der sich unter dem Endabschnitt 12a der Sägeblätter 12 befindet. Aus Figur 1 ist erkennbar, daß die Einsaugöffnung 20 des Absaugkanals 17 als Längsschlitz ausgebildet ist, der im montierten Zustand unterhalb des Längsschlitzes 21 des Maschinengehäuses 13 und somit unterhalb des hinteren Endabschnittes 12a der Sägeblätter - gemäß Figur 3 - liegt.

Aus Figur 2 ist erkennbar, daß die Einhängvorrichtung 19 des Absaugkanals 17 aus einer oben an der Rückseite des Absaugkanals 17 hochstehenden Zunge 23 mit abgewinkeltem Zungenende 23a besteht, die in einem an der Unterseite des Handgriffs 14 am Maschinengehäuse 13 ausgebildeten Querschlitz 22 in der Gehausewand 13a eingehängt ist. Im dargestellten hochgeschwenkten Zustand des Absaugkanals 17 liegt das Zungenende 23a auf der Gehäusewand 13a am Querschlitz 22 auf. Dadurch ist sichergestellt, daß ein auf den Absaugstutzen 18 aufzuschiebener Staubsaugerschlauch durch Zugkräfte den Absaugkanal 17 nicht nach hinten von der Schwertsäge 10 herunterreißen kann. Im vorderen Bereich des Absaugkanals 17 steht an beiden Seiten ein angeformter U-förmiger Rastbügel 24 hoch. Beide Rastbügel 24 wirken jeweils mit einer beidseitig vorn am Maschinengehäuse 13 angeformten Rastnase 25 zusammen, indem der eingehängte Absaugkanal 17 vorn soweit hochgeschwenkt wird, daß die Rastbügel 24 über den Rücken der Rastnasen 25 hochgeschoben werden und schließlich an den Rastnasen 25 einrasten. Der Absaugkanal 17 hat eine längliche, dem Profil der Unterseite des Maschinengehäuses 13 angepaßte Form mit rechteckigem Querschnitt, wobei sein hinterer Abschnitt 17b schräg nach oben in den Absaugstutzen 18 ausläuft. Zum Abstellen der Schwertsäge 10 ist die Unterseite 17c des Absaugkanals 17 als ebene Abstellfläche ausgebildet.

## Patentansprüche

1. Handgeführte elektrisch angetriebene Schwertsäge mit an der Unterseite eines feststehenden nach vorn gerichteten Schwertes aufgenommenen hin- und hergehendem Sägeblatt, dessen hinterer Endabschnitt innerhalb des Maschinengehäuses am Getriebeausgang aufgenommen ist, dadurch gekennzeichnet, daß an der Unterseite des Maschinengehäuses (13) ein Absaugkanal (17) befestigt ist, dessen Einsaugöffnung (20) von der vorderen Stirnseite (17a) des Absaugkanals (17) bis unter einen unterhalb des hinteren Endabschnittes(12a) des Sägeblattes (12) ausgebildeten Längsschlitz (21) des Maschinengehäuses (13) reicht.

2. Schwertsäge nach Anspruch 1, dadurch gekennzeichnet, daß die Einsaugöffnung (20) des Absaugkanals (17) als Längsschlitz unterhalb des hinteren Endabschnittes (12a) des Sägeblattes (12) ausgebildet ist.

3. Schwertsäge nach Anspruch 1, dadurch gekennzeichnet, daß der Absaugkanal (17) an der Unterseite des Maschinengehäuses (13) mit einem an seiner Rückseite angeformten, parallel zur Längsachse des Werkzeugs verlaufenden Absaugstutzen (18) als separates, abnehmbares Teil ausgebildet ist, indem es im Bereich des Absaugstutzens (18) mittels einer Einhängvorrichtung (19) am Maschinengehäuse (13) scharnierartig schwenkbar eingehängt und im vorderen Bereich mit Rastmitteln (24, 25) am Maschinengehäuse (13) einrastbar ist.

4. Schwertsäge nach Anspruch 3, dadurch gekennzeichnet, daß die Einhängvorrichtung (19) aus einer oben an der Rückseite des Absaugkanals hochstehende Zunge (23) mit einem abgewinkelten Zungenende (23a) besteht, das in einem an der Unterseite des Handgriffs (14) am Maschinengehäuse (12) ausgebildeten Querschlitz (22) in der Gehausewand (13a) eingreift.

5. Schwertsäge nach Anspruch 4, dadurch gekennzeichnet, daß im vorderen Bereich des Absaugkanals (17) an beiden Seiten ein angeformter U-förmiger Rastbügel (24) hochsteht, der jeweils über eine beidseitig vorn am Maschinengehäuse (13) angeformte Rastnase (25) schiebbar ist.

6. Schwertsäge nach einem der vorherigen Ansprüche, dadurch gekennzeichnet, daß der Absaugkanal (17) eine längliche Form mit rechteckigem Querschnitt hat, dessen hinterer Abschnitt (17b) schräg nach oben in den Absaugstutzen (18) ausläuft.

7. Schwertsäge nach Anspruch 6, dadurch gekennzeichnet, daß die Unterseite (17c) des Absaugkanals (17) als ebene Abstellfläche ausgebildet ist.

## Claims

1. Hand-held, electrically driven sabre saw, having a reciprocating saw blade accommodated on the underside of a fixed, forwardly directed sabre, the rear end section of which saw blade is accommodated inside the machine casing, at the drive output, characterized in that a suction duct (17) is attached to the underside of the machine casing (13), the intake orifice (20) of which duct extends from the front end (17a) of the suction duct (17) to as far as beneath a longitudinal slot (21), formed below the rear end section (12a) of the saw blade (12), of the machine casing (13).

2. Sabre saw according to Claim 1, characterized in that the intake orifice (20) of the suction duct (17) is formed as a longitudinal slot beneath the rear end section (12a) of the saw blade (12).

3. Sabre saw according to Claim 1, characterized in that the suction duct (17) on the underside of the machine casing (13), with a suction connection piece (18) formed integrally at its rear side and running parallel to the longitudinal axis of the tool, is designed as a separate, removable part, by virtue of the fact that it is pivotably suspended, in a hinge-like manner, from the machine casing (13) in the region of the suction connection piece (18) by means of a suspension device (19) and can be latched to the machine casing (13) in the front region using latching means (24, 25).

4. Sabre saw according to Claim 3, characterized in that the suspension device (19) comprises an upright tongue (23) at the top of the rear side of the suction duct with an angled-off tongue end (23a) which engages in a transverse slot (22), formed on the underside of the handle (14) on the machine casing (13), in the casing wall (13a).

5. Sabre saw according to Claim 4, characterized in that an integrally formed, U-shaped latching bow (24) protrudes upwards on both sides of the front region of the suction duct (17), which bow can in each case be pushed over a latching lug (25) formed integrally on both sides of the front of the machine casing (13).

6. Sabre saw according to one of the preceding claims, characterized in that the suction duct (17) has an elongate shape with a rectangular cross-section, the rear section (17b) of which ends by running obliquely upwards into the suction connection piece (18).

7. Sabre saw according to Claim 6, characterized in that the underside (17c) of the suction duct (17) is designed as a planar resting surface.

## Revendications

1. Scie-sabre électrique portable, comportant une lame de scie à mouvement alternatif logée dans le côté inférieur d'un sabre fixe dirigé vers l'avant, et dont le segment arrière est logé dans le boîtier de machine à la sortie de la transmission,
caractérisée en ce qu'
un canal d'aspiration (17) est fixé sur le côté inférieur du boîtier (13) de la machine, l'orifice d'aspiration (20) du canal allant de la face frontale avant (17a) du canal d'aspiration (17) jusqu'en dessous d'une fente longitudinale (21) du boîtier de machine (13), sous le segment d'extrémité arrière (12a) de la lame de scie (12).

2. Scie-sabre selon la revendication 1,
caractérisée en ce que
l'orifice d'aspiration (20) du canal d'aspiration (17) est réalisé sous la forme d'une fente longitudinale en dessous du segment d'extrémité arrière (12a) de la lame de scie (12).

3. Scie-sabre selon la revendication 1,
caractérisée en ce que
le canal d'aspiration (17) est réalisé sous la forme d'une pièce amovible, distincte, sur le côté arrière du boîtier (13) de la machine avec un ajutage d'aspiration (18) parallèle à la fente longitudinale de l'outil formée sur son côté arrière et, dans la zone de l'ajutage d'aspiration (18), l'accrochage se fait de manière pivotante à la manière d'une charnière par un dispositif d'accrochage (19) dans le boîtier (13) de la machine et dans la zone avant l'accrochage se fait à l'aide d'un moyen d'accrochage (24, 25) prévu sur le boîtier (13) de la machine.

4. Scie-sabre selon la revendication 3,
caractérisée en ce que
le dispositif d'accrochage (19) est formé d'une languette (23) relevée au niveau du côté arrière du canal d'aspiration et ayant une extrémité de languette (23a) repliée, qui vient prendre dans une fente transversale (22) de la paroi (13a) du boîtier au niveau du côté inférieur de la poignée (14) dans le boîtier (12) de la machine.

5. Scie-sabre selon la revendication 4,
caractérisée par
un étrier d'encliquetage (24) en forme de U, dépassant vers le haut se glisse chaque fois par-dessus un bec d'accrochage (25) formé des deux côtés à l'avant du boîtier (13) de la machine dans la zone avant du canal d'aspiration (17), des deux côtés.

6. Scie-sabre selon l'une des revendications précédentes,
caractérisée en ce que
le canal d'aspiration (17) a une forme allongée de section rectangulaire dont le segment arrière (17b) se poursuit en biais vers le haut par l'ajutage d'aspiration (18).

7. Scie-sabre selon la revendication 6,
caractérisée en ce que
le côté inférieur (17c) du canal d'aspiration (17) est en forme de surface d'appui, plane.
